# EUROPÄISCHE PATENTANMELDUNG

(11) **EP 0 903 916 A2**
(43) Veröffentlichungstag der Anmeldung: **24.03.1999**
(21) Anmeldenummer: 98250298.1
(22) Anmeldetag: 25.08.1998
(51) Int. Cl.: H04M 3/42, H04M 11/04, H04Q 7/00

(54) **Verfahren zur Rufnummernzuweisung und Anordnung zur Durchführung des Verfahrens**

(30) Priorität: 19.09.1997 DE 19742338
(71) Anmelder: MANNESMANN Aktiengesellschaft, 40213 Düsseldorf (DE)
(72) Erfinder: Schulz, Werner, Dr. rer.nat., 40670 Meerbusch (DE); Heimann, Josef, Dipl.-Ing., 40629 Düsseldorf (DE); Schlottbom, Karlheinz, Dipl.-Math., 40885 Ratingen (DE)
(74) Vertreter: Henze, Lothar

(57) **Zusammenfassung**

Die Erfindung betrifft ein Verfahren zur Rufnummernzuweisung (x₁) bei einem Anruf eines in einem Kommunikationsnetz nicht mit einer eigenen Anrufernummer identifzierten Endgerätes (8) bei einer Zielnummer (117) aus einer vorgebbaren Gruppe von Zielnummern (117,118), wobei während der Kommunikation des Endgerätes (8) mit der von ihm auf eine Eingabe eines Auslösesignals in das Endgerät (8) hin gewählten Nummer (14;117) dem Endgerät (8) im Kommunikationsnetz eine Anrufernummer (x₁) aus einer vorgebbaren Gruppe (12) reservierter Anrufernummern (x₁, x₂) zugeteilt wird, und wobei diese Anrufernummer (x₁) nach dieser Kommunikation des Endgerätes (8) mit dem Teilnehmer mit der angerufenen Zielnummer (117) wieder für einen erneuten Anruf eines nicht identifzierten Endgerätes bei einer Zielnummer (117,118) aus der Gruppe (13) von Zielnummern freigeschaltet wird,
Die Erfindung betrifft weiterhin ein Endgerät, eine Kommunikationszentrale (6) bzw. eine Notrufzentrale (7).
Es wird eine effiziente Rufnummernverwaltung von Endgeräten ohne eigene Mobilfunknummer ermöglicht.

## Beschreibung

Die Erfindung betrifft ein Verfahren zur Rufnummernzuweisung, ein Endgerät und eine Kommunikationszentrale.

Um dem Inhaber eines Endgeräts, insbesondere eines Endgeräts für ein Kraftfahrzeug, einen Anruf bei einer speziellen Telefonnummer, insbesondere einen möglichst schnellen Notruf etc. zu ermöglichen, soll das Endgerät mit einer Notruffunkion ausgestattet werden. Notrufe mobiler Endgeräte sind insbesondere über Mobilfunk realisierbar. Jedoch ist in Mobilfunknetzen ein Anruf eines Endgerätes nur möglich, wenn das Endgerät im Netz bekannt ist, also beispielsweise ein Mobilfunk-Vertrag für das Endgerät abgeschlossen und diesem eine Mobilfunknummer zugeteilt ist. Die Verwaltung, insbesondere die Abrechnung und Korrespondenz usw. für ein am Mobilfunknetz teilnehmendes Endgerät ist jedoch sehr aufwendig; die Verwaltungskosten übersteigen die Einnahmen aus Gebühren bei einem für ein einzelnes Endgerät seltenen Anruf des Fahrzeuges bei einer (von evtl. mehreren) Zielnummer wie z.B. einer Notrufnummer.

Aufgabe der Erfindung ist deshalb das Ermöglichen des Anrufs einer Zielnummer aus einer vorgebbaren Gruppe von Zielnummern, insbesondere einer Notrufnummer durch ein Endgerät unter Optimierung der mobilfunknetzseitig verursachten Kosten. Die Aufgabe wird durch die Gegenstände der unabhängigen Ansprüche gelöst.

Durch das erfindungsgemäße Verfahren kann ein Endgerät vorgebbare Zielnummern, insbesondere Notrufnummern, anrufen, ohne beispielsweise durch einen Mobilfunkvertrag und eine zugehörige Endgerättelefonnummer im Kommunikationsnetz, insbesondere Mobilfunknetz, identifiziert zu sein. Dadurch, daß dem Endgerät beim Anruf einer der vorgebbaren Zielnummern eine Anrufernummer aus einer vorgegebenen Gruppe kationsnetzes durch das Endgerät möglich. Dabei werden zweckmäßig die reservierten Anrufernummern lediglich für Endgeräte ohne Identifikation im Kommunikationsnetz, insbesondere für Notrufe, verwendet. Es ist auch die Verwendung des Verfahrens zum (z.B. seltenen) Liefern von Verkehrsdaten (FCD) von einem Fahrzeug an eine Verkehrszentrale an eine spezielle Zielnummer möglich. Auch ist eine Verwertung des Verfahrens für Mautabrechnungen mit einer Maut-Zielnummer möglich. Nach einem Anruf eines Endgerätes bei einer Zielnummer kann die ihm temporär Zugewiesene Anrufernummer wieder für einen Anruf eines Endgerätes bei einer Zielnummer freigeschaltet werden.

Die Anwahl einer der Zielnummern aus der vorgebbaren Gruppe von Zielnummern, insbesondere einer Notrufnummer, durch das Endgerät kann auf eine manuelle Eingabe, insbesondere das Betätigen einer Notruftaste, hin ausgeführt werden. Dies ermöglicht einen schnellen Notruf im Falle eines Unfalles oder dergleichen, wobei bei Anruf aufgrund einer gedrückten Notruftaste etc. das Eingeben einer Notruftelefonnummer eingespart wird. Ferner ist es möglich, das Auslösesignal automatisch zu generieren, insbesondere durch bei einem Unfall betätigte Sensoren, wie Beschleunigungs- und/oder Verformungssensoren, was eine besonders schnelle Hilfe im Falle eines Unfalles ermöglicht und überdies einen Anruf auch dann ermöglicht, wenn aufgrund des Unfalles die Beteiligten nicht mehr in der Lage sind, selbst bei einer Zielnummer, insbesondere Notrufnummer, anzurufen.

Die Zielnummer enthält zweckmäßig die Nummer einer Notrufzentrale. Überdies enthält die Zielnummer zweckmäßig die Position des die Zielnummer anrufenden Endgerätes. Damit ist zumindest näherungsweise der Ort des Endgerätes automatisiert und damit schnell und fehlerfrei feststellbar und beispielsweise in einer Notrufzentrale weiterverarbeitbar. Dabei wird die Position des Endgerätes in der Zielnummer zweckmäßig in Form seiner geographischen Länge und Breite, insbesondere nach der Nummer einer Notrufzentrale, übermittelt; durch eine in der Notrufzentrale und im Endgerät standardisierbare Rundung, also durch die Übermittlung der geographischen Länge und Breite mit einer jeweils vorgegebenen Stellenzahl sind die geographische Länge und Breite sehr einfach automatisiert weiterbearbeitbar; überdies ist in Endgeräten, welche auch zur Navigation oder Verkehrserfassung oder Verkehrsinformation verwendet werden, teilweise die Endgerät-Position in Form geographischer Länge und Breite aus einer Positionsbestimmungseinrichtung, insbesondere GPS, bekannt. Ferner ist es zweckmäßig, wenn die angerufene Zielnummer zusätzlich zur Nummer einer Notrufzentrale und eventuell des Positionsendgerätes eine Zeitangabe über den Zeitpunkt des Anrufs des Endgerätes bei der Zielnummer enthält; deshalb weist das Endgerät zweckmäßig eine Zeiterfassungseinrichtung, also Uhr oder Funkuhr, auf, deren Zeitangabe zur Generierung entsprechender Stellen der angerufenen Zielnummer verwendet wird. Damit ist auch der Zeitpunkt eines Unfalls automatisiert bei dem der Zielnummer zugeordneten Teilnehmer, insbesondere einer Notrufzentrale, weiterbearbeitbar. Die Übermittlung der Endgerät-Position und/oder des Zeitpunkts des Anrufs des Endgerätes bei einer Zielnummer in Form von deren Angabe an bestimmten Positionen der Zielnummer hat den Vorteil, daß diese Daten ohne Aufnahme einer Telefonvollverbindung beim der Zielnummer zugeordneten Teilnehmer, insbesondere einer Notrutzentrale, weiterverarbeitet werden können.

Wenn das Endgerät eine Quittierung seines Anrufes erhält, ist eine Information des Endgerätbesitzers über den erfolgreichen Anruf möglich, was insbesondere im Falle eines Unfalles zweckmäßig ist.

Weitere Merkmale und Vorteile ergeben sich aus der nachfolgenden Beschreibung eines Ausführungsbeispiels anhand der Zeichnung. Dabei zeigt:
- Fig. 1: schematisch den Anruf eines Kraftfahrzeuges bei einer Zielnummer über ein Mobilfunknetz,
- Fig. 2: als Flußdiagramm grob den Ablauf eines Anrufes und dessen Bearbeitung.

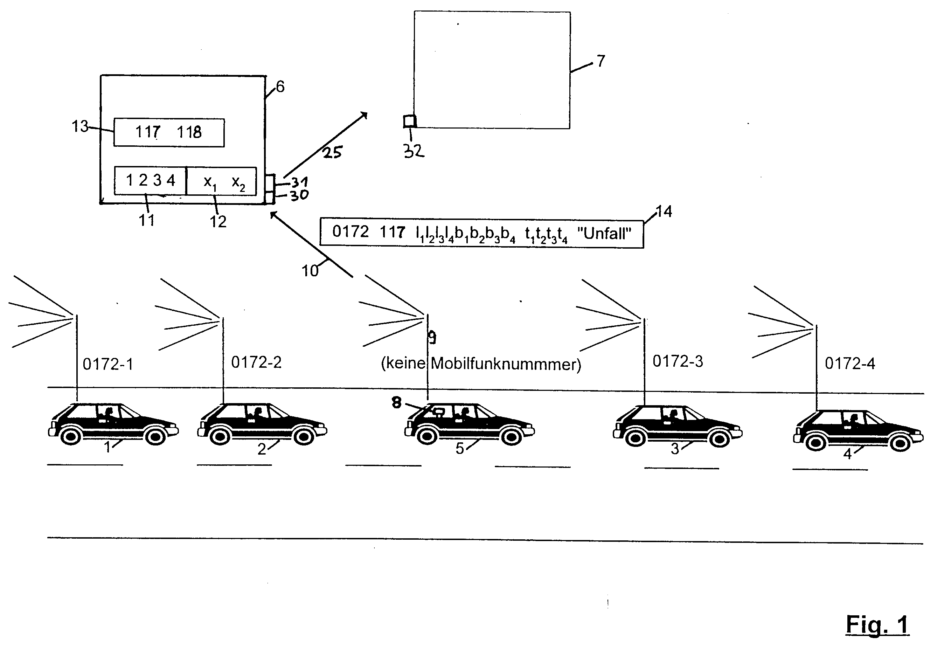

Figur 1 zeigt sich auf einer Straße fortbewegende Fahrzeuge 1 bis 4 mit eingebauten Mobilfunkgeräten mit jeweils zugeordneten Mobilfunknummern (0172-1 bis 0172-4) und ein Fahrzeug 5 mit einem erfindungsgemäßen Endgerät ohne eigene Mobilfunknummer sowie eine Telekommunikationszentrale 6 eines Kommunikationsnetzes, hier eines Mobilfunknetzes und eine Notrufzentrale 7.

Das Endgerät 8 im Fahrzeug 5 soll eine bestimme Zielnummer anrufen. Die Zielnummer kann beispielsweise eine Nummer sein, bei der ein Fahrzeug FCD-Daten wie seine Geschwindigkeit und/oder Position etc. an eine Verkehrszentrale sendet. Es kann z.B. auch eine Nummer für Mauterfassungen sein. Im Falle eines Unfalls des Fahrzeuges 5 kann dies insbesondere die Telefonnummer 117 einer Notrufzentrale 7 sein. Ein derartiger Anruf kann manuell durch Drücken einer Notruffaste oder durch Sensoren im Fahrzeug, inbesondere Beschleunigungs- und/oder Verformungssensoren im Falle eines Unfalles etc., ausgelöst werden. Der Anruf des Endgerätes 8 im Fahrzeug 5 erfolgt über eine Antenne 9 des Fahrzeuges per Funk 10 in für Mobilfunkgeräte üblicher Weise über eine Telekommunikationszentrale 6 des Kommunikationsnetzes bei einer Notrufzentrale 7.

In der Telekommunikationszentrale 6 des Kommunikationsnetzes sind die Nummern von identifizierten Endgeräten, beispielsweise die Mobilfunk-Nummern der Endgeräte der Fahrzeuge 1 bis 4, als Anrufernummern gespeichert; die Endgeräte in den Fahrzeugen 1 bis 4 haben also beispielsweise Mobilfunkverträge und eigene zugewiesene Mobilfunk-Anrufernummern. Zusätzlich zu einer das Kommunkationsnetz, hier Mobilfunknetz, kennzeichnenden Anrufernummer (0172 etc.) haben die Endgeräte eigene, sie identifizierende Anrufernummern. Diese Anrufernummern 1 bis 4 etc. sind in der Kommunikationszentrale in einem Speicher 11 gespeichert als Nummern identifizierter Endgeräte. Das Endgerät 8 im Kraftfahrzeug 5 ist jedoch in der Kommunikationszentrale des Kommunikationsnetzes nicht als Teilnehmer mit einem Vertrag und einer Anrufernummer gespeichert. Die Zuweisung eigener Anrufernummern zu lediglich für seltene Anrufe bestimmten Zielnummern, insbesondere Notrufnummern, verwendeten Endgeräten 8 wäre auch aus administrativen, insbesondere Abrechnungsgründen, zu kostenintensiv. Deshalb wird im Falle eines Anrufes des Endgerätes 8 bei der Telekommunikationszentrale 6 des Kommunikationsnetzes dem Endgerät für die Dauer seines Anrufes bei einer Zielnummer aus einer vorgebbaren Gruppe von Zielnummern, insbesondere einer Notrufnummer (117) einer Notrufzentrale 7, eine Anrufernummer x₁ aus einer vorgebbaren Gruppe 12 von hierfür reservierten Anrufernummern x₁, x₂ usw. zugeteilt. Nach Beendigung der Kommunikation zwischen dem Endgerät und der Zielnummer, insbesondere Notrufzentrale-Nummer (117), wird die temporär dem Endgerät zugewiesene Anrufernummer wieder freigegeben für einen erneuten Anruf eines nicht in der Kommunikationszentrale 6 des Kommunikationsnetzes identifzierten Endgerätes.

In der Kommunikationszentrale 6es Kommunikationsnetzes wird hier vor der Vergabe einer Anrufernummer x₁, x₂ etc. aus der Gruppe 12 der hierfür reservierten Anrufernummern geprüft, ob die vom Endgerät angerufene Zielnummer (117) der Notrufzentrale 7 etc. in der vorgebbaren Gruppe 13 von Zielnummern (117 usw.) enthalten ist. Falls sie enthalten ist, wird der Anruf des Endgerätes 8 an den durch die Zielnummer oder deren Anfang identifzierten Teilnehmer, hier die Notrufzentrale 7 weitergegeben 25.
In der Notrufzentrale 7 können ggf. zusätzlich zu deren Nummer (117) in der Zielnummer übermittelte Nummernbestandteile ausgewertet werden. Insbesondere weist im vorliegenden Fall das Endgerät eine Positionsbestimmungseinrichtung, und zwar hier eine GPS-Einheit, auf. Die hierdurch bestimmte Position wird zusätzlich zu der Nummer (117) der Notrufzentrale 7 in der angerufenen Gesamtzielnummer 14 vom Endgerät 8 an die Telekommunikationszentrale 6 und von dieser weiter an die Notrufzentrale 7 übermittelt. Die Position kann insbesondere in Form gerundeter geographischer Länge und Breite nach einer Kommunikationsnetznummer (bespielsweise 0172 bei einem Mobilfunknetz) und der Zielnummer (117) der Notrufzentrale 7 übertragen werden. Dazu wird im Endgerät die von dessen Positionsbestimmungseinrichtung bestimmte und gerundete Position l₁, l₂, l₃, l₄, b₁, b₂, b₃, b₄ an die Nummer angehängt. In der Zentrale und im Endgerät 8 ist standardisiert, wie, insbesondere an welcher Position und mit welcher Länge, die Position in der Gesamtzielnummer 14 übertragen wird. Damit ist schnell und fehlerfrei eine Positionsbestimmung des Endgeräte 8 und damit eines Unfalls etc. möglich.

Ferner kann die angerufene Gesamtzielnummer 14 weitere Daten enthalten. Insbesondere kann eine Angabe t₁, t₂, t₃, t₄ über die Zeit des Anrufs des Endgerätes bei einer Zielnummer enthalten sein. Diese ist dabei im Endgerät und in der Zentrale standardisiert. Sie kann beispielsweise von einer Zeiterfassungseinheit im Endgerät 8 zur Bildung entsprechender Stellen in der Gesamtzielnummer 14 verwendet werden. Die Übermittlung von Daten als virtuelle Telefonnummernbestandteile hat den Vorteil, daß diese Daten über das Kommunikationsnetz zum Teilnehmer mit der Zielnummer (117) übertragen werden und dort automatisiert und damit z.B. auch ohne Aufbau einer Vollverbindung zwischen dem Endgerät und dem Teilnehmer mit der Zielnummer auswertbar sind. Insbesondere wenn in der Gesamtzielnummer 14 auch ein den Grund den Anrufs, wie beispielsweise "Unfall" oder dgl., definierender, im Endgerät und in der Notrufzentrale gleich standardisierter Code übertragen wird, ist eine bevorzugte Behandlung bestimmter Anrufe möglich. Überdies kann die Anrufentgegennahme derart ohne Wartezeiten wegen besetzter, in längere Kommunikation verwickelte Teilnehmer der Zielnummer (117) mit anderen Endgeräten, verzögert werden. In der Notrufzentrale 7 ist eine Zielnummernbearbeitungseinrichtung vorgesehen. Diese erfaßt übermittelte zusätzliche Teile der Gesamtzielnummer 14, insbesondere Ort und/oder Zeit und/oder Sonstiges ("Unfall"), wertet sie aus und veranlaßt geeignete Maßnahmen, insbesondere das Aussenden von Rettungsfahrzeugen zum angegebenen Ort.

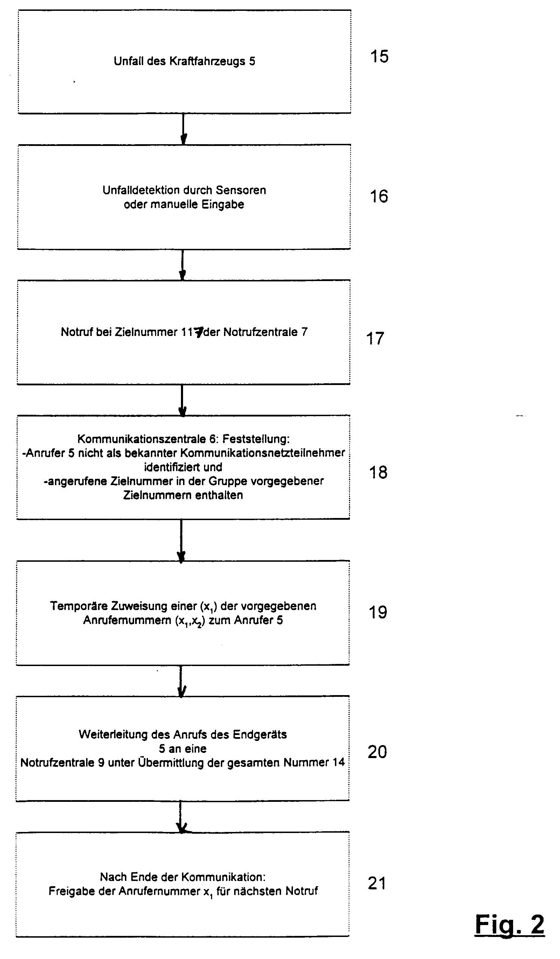

Figur 2 zeigt als Flußdiagramm den Ablauf eines Anrufs und dessen Weiterbearbeitung. Nach einem Unfall im (Schritt 15) und dessen Detektion oder einer manuellen Eingabe im Schritt 16 wird im Schritt 17 die Gesamtzielnummer 14 generiert, welche evtl. eine Kommunikationsnetznummer (0172 etc.), die Zielnummer (117) einer Notrufzentrale, die im Endgerät von einer Positionsbestimmungseinrichtung ermittelte geographische Position in definiertem Format l₁, l₂, l₃, l₄, b₂, b₃, b₄, die Zeit t₁, t₂, t₃, t₄ (zwei Stellen für die Stunde, zwei Stellen für die Minute etc.) und weitere Daten (hier: "Unfall") umfaßt. Im Schritt 18 wird im Festnetz geprüft und festgestellt, daß die angerufene Zielnummer bzw. der Bestandteil 117 der Gesamtzielnummer 14 eine Nummer aus der Gruppe vorgegebener Zielnummern ist. Da das Endgerät 8 keine eigene Nummer im Kommunikationsnetz hat, wird ihm im Schritt 19 für die Dauer des Anrufs eine temporäre Anrufernummer x₁ aus einer vorgegebenen Gruppe 12 reservierter Anrufernummern x₁, x₂ usw. zugewiesen und im Schritt 20 der Anruf an die Zielnummer mit den weiteren Bestandteilen l₁ bis "Unfall" der Gesamtzielnummer 14 übermittelt.. Hier kann eine Vollverbindung aufgenommen werden oder es können stattdessen lediglich die mit der Gesamtzielnummer 14 übermittelten Daten l₁ bis "Unfall" automatisch ausgewertet werden. Ferner erfolgt hier eine Quittierung des Anrufs an das Endgerät 8, wo diese Quittierung beispielsweise durch eine Ausgabeeinrichtung, wie eine Kontrollampe etc. ausgegeben werden kann. Im Schritt 21 wird nach der Kommunikation zwischen Endgerät 8 und der Notrufzentrale 7 mit der Zielnummer die dem Endgerät 8 zugewiesene Anrufernummer x₁ wieder freigegeben für den nächsten Anruf eines Endgerätes.

## Patentansprüche

1. Verfahren zur Rufnummernzuweisung (x₁) bei einem Anruf (10) eines in einem Kommunikationsnetz nicht mit einer eigenen Anrufernummer identifizierten Endgerätes (8) bei einer Zielnummer (117) aus einer vorgebbaren Gruppe von Zielnummern (117,118), wobei während der Kommunikation des Endgerätes (8) mit der von ihm auf eine Eingabe eines Auslösesignals in das Endgerät (8) hin gewählten Nummer (14;117) dem Endgerät (8) im Kommunikationsnetz (6) eine Anrufernummer (x₁) aus einer vorgebbaren Gruppe (12) reservierter Anrufernummern (x₁, x₂) zugeteilt wird, und wobei diese Anrufernummer (x₁) nach dieser Kommunikation des Endgerätes (8) mit dem Teilnehmer (7) mit der angerufenen Zielnummer (117) wieder für einen erneuten Anruf eines nicht identifizierten Endgerätes bei einer Zielnummer (117,118) aus der Gruppe (13) von Zielnummern freigeschaltet wird.

2. Verfahren nach Anspuch 1,
dadurch gekennzeichnet,
daß das Auslösesignal durch manuelle Eingabe oder bei manueller Eingabe generiert wird.

3. Verfahren nach einem der vorhergehenden Ansprüche,
dadurch gekennzeichnet,
daß das Auslösesignal automatisch generiert wird.

4. Verfahren nach einem der vorhergehenden Ansprüche,
dadurch gekennzeichnet,
daß das Auslösesignal bei einem Unfall von einem Sensor, insbesondere von Beschleunigungs- und/oder Verformungssensoren in einem Fahrzeug (5) ausgelöst wird.

5. Verfahren nach einem der vorhergehenden Ansprüche,
dadurch gekennzeichnet,
daß die Zielnummer die Nummer (117) einer Notrufzentrale enthält.

6. Verfahren nach einem der vorhergehenden Ansprüche,
dadurch gekennzeichnet,
daß die vom Endgerät angerufene Gesamtzielnummer (14) die Position (l₁, l₂, l₃, l_{4'}, b₁, b₂, b₃, b₄) des Endgerätes (8) enthält.

7. Verfahren nach Anspruch 6,
dadurch gekennzeichnet,
daß die Position in Form der gerundeten geographischen Länge (l₁, l₂, l₃, l₄) und geographischen Breite (b₁, b₂, b₃, b₄) des Endgerätes (8) nach der Nummer (117) einer Notrufzentrale als Teil in einer vom Endgerät angerufenen Gesamtzielnummer (14) enthalten ist.

8. Verfahren nach einem der vorhergehenden Ansprüche,
dadurch gekennzeichnet,
daß die angerufene Gesamtzielnummer (14) die Zeit des Anrufs (t₁, t₂, t₃) repräsentierende Stellen enthält.

9. Verfahren nach einem der vorhergehenden Ansprüche,
dadurch gekennzeichnet,
daß das Endgerät (8) eine Quittierung seines Anrufs erhält.

10. Verfahren nach einem der vorhergehenden Ansprüche,
dadurch gekennzeichnet,
daß das Kommunikationsnetz ein Mobilfunknetz, insbesondere GSM-Netz, ist.

11. Endgerät mit einem Programm zur Durchführung des Verfahrens nach einem der vorhergehenden Ansprüche, einem Speicher für das Programm, einem Prozessor zum Abarbeiten des Programms und einer Sendeeinrichtung (9) zum Anrufen einer Nummer (14; 117) im Kommunikationsnetz.

12. Endgerät nach Anspruch 11,
dadurch gekennzeichnet,
daß es eine Positionsbestimmungseinrichtung, insbesondere GPS, aufweist.

13. Endgerät nach Anspruch 11 oder 12,
dadurch gekennzeichnet,
daß es eine Zeiterfassungseinrichtung aufweist.

14. Telekommunikationszentrale (6) eines Kommunikationsnetzes mit einem Programm zur Durchführung des Verfahrens nach einem der Ansprüche 1 bis 10, einem Speicher für das Programm, einem Prozessor zum Abarbeiten des Programmes, mindestens einer Sende- und Empfangseinrichtung (30,31), einem Speicher für eine Gruppe (13) von Zielnummern (117,118) und einem Speicher für eine Gruppe (12) von für Anrufe nicht identifizierter Endgeräte bei einer der Zielnummern reservierter Anrufernummern (x₁, x₂).

15. Zentrale nach Anspruch 14,
dadurch gekennzeichnet,
daß die Sende- und Empfangseinrichtung (30) zum Kommunizieren mit dem Endgerät (8) eine Mobilfunkeinrichtung ist.

16. Zentrale nach einem der Ansprüche 14 oder 15,
dadurch gekennzeichnet,
daß die Sende- und Empfangseinrichtung (31) zum Kommunizieren mit einem Teilnehmer (Notrufzentrale 7) mit einer Zielnummer (117) eine Festnetzkommunikationseinrichtung ist.

17. Notrufzentrale mit einem Programm zum Durchführen des Verfahrens nach einem der Ansprüche 1 bis 10, einem Speicher für das Programm, einem Prozessor zum Abarbeiten des Programms, einer Kommunikationseinrichtung (32), einer Zielnummernbearbeitungseinrichtung zum Bearbeiten von über die Nummer (117) der Notrufzentrale (7) hinausgehenden Bestandteilen (l₁, l₂, l₃, l₄, b₁, b₂, b₃, b₄, t₁, t₂, t₃, t₄ "Unfall") der Gesamtzielnummer (14) die an die Notrufzentrale (9) bei ihrem Anruf übermittelt wird.
